# EUROPEAN PATENT APPLICATION

(11) **EP 4 650 155 A1**
(43) Date of publication of application: **19.11.2025**
(21) Application number: 24176695.5
(22) Date of filing: 17.05.2024
(51) Int. Cl.: B29C 70/00, B29C 65/70, B29C 65/00, C08J 5/24, B29K 63/00

(54) **FIBRE COMPOSITE MATERIAL, A METHOD OF MANUFACTURING A COMPOSITE STRUCTURE AND COMPOSITE STRUCTURE**

(71) Applicant: Airbus S.A.S., 31700 Blagnac (FR)
(72) Inventor: Meer, Thomas, Taufkirchen (DE); Beier, Uwe, Beier, Uwe, Taufkirchen (DE); Hübner, Fabian, Taufkirchen (DE); Bautz, Brian, Taufkirchen (DE)
(74) Representative: Isarpatent

(57) **Abstract**

The present invention provides a fibre composite material (10) containing at least one layer of reinforcing fibres embedded in a polymer matrix (11), with the polymer matrix (11) being formed by a curable resin and comprising at least one first region (100) having a first curing property of the resin and at least one second region (200) having a second curing property of the resin, wherein the at least one first curing property is different from the at least one second curing property, a method of manufacturing a composite structure (12), and a composite structure (12) manufactured in the method.

## Description

The present invention pertains to a fibre composite material, a method of manufacturing a composite structure and composite structure.

Although it can be used in many applications, the present invention and the problems underlying it are explained in greater detail in relation to tank structures in aircrafts, in particular tank structures to store liquid hydrogen (LH2). However, the structure and method described can likewise be used in other fields of application, in particular in vehicles in all sectors of the transport industry, e. g. for road vehicles, for rail vehicles or for watercraft.

Hydrogen propelled aircraft are a key technology for zero emission aviation that requires technological adaptations in the systems employed in such aircraft. One of these systems is the energy storage system or tank. State of the art liquid H2 (LH2) storage systems are metal, e.g. aluminium based. Light weight structures, in particular carbon fibre reinforced plastics (CFRP) tanks are favoured over metal, e.g. aluminium tanks for enhanced performance and tank weight to storage ratio in cryogenic environments required to store liquid hydrogen (LH2), since hydrogen must be stored liquid at -253°C to achieve viable volumetric energy densities in particular in an aircraft. CFRP can strongly reduce the weight of LH2 tank systems but have to ensure H2 tightness. Approaches to manufacture liquid hydrogen composite tank systems use winding of the composite material to form the whole tank structure. To ensure H2 tightness in combination with the potentially thinnest laminates with respect to mechanical performance, techniques such as fibre preform processes (FPP) for e.g. curved tank domes and automated fibre placement (AFP) processes for e.g. cylindric portions need to be improved. Due to the size and complexity of some structures, one-piece production is often not possible. The assembly of substructures requires a following joining, e.g. by adhesive bonding of the substructures of the final composite structure. This is in particular the case with tanks, such as H2 tanks, where supply systems and pipes have to be arranged inside the tank, that requires a manufacture from several tank parts or portions that need to be connected to finalise, i. e. close the tank structure. Joints formed by adhesion in application with tank structures but also with other structures such as fuselage or wings of aircraft pose a safety risk that must be eliminated by providing a secondary load path by elements such as rivets or bolts. These elements however are not applicable for H2 tank systems due to tightness requirements.

Against this background, it is an object of the present invention to find a fibre composite material and a method that enables manufacturing of composite structures from the material to ensure high performance and tightness in joints within the structures.

This object is achieved by a fibre composite material having the features of claim 1, a method of manufacturing a composite structure having the features of claim 6 and a composite structure having the features of claim 12.

According to a first aspect of the invention, a fibre composite material containing at least one layer of reinforcing fibres embedded in a polymer matrix is provided, with the polymer matrix being formed by a curable resin and comprising at least one first region having a first curing property of the resin and at least one second region having a second curing property of the resin, wherein the at least one first curing property is different from the at least one second curing property.

This has the advantage that a composite material, preferably manufactured from a carbon-fibre reinforced plastic material, can be provided with locally uncured / less cured matrixes. The first region can be cured in a first curing step whereas the second region can be finally cured in a second curing step during the joining process in touch with a counterpart composite material establishing a chemical or covalent bond between the regions thereby forming a highly reliable and tight joint in the respective regions making rivets, bolts and adhesive bonding obsolete.

A further aspect of the invention lies in a method of manufacturing a composite structure, comprising at least a first and a second substructure each comprising or consisting of the invention fibre composite material. The method comprises the steps of curing the first region of the first substructure and the first region of the second sub-structure, contacting the first substructure with the second substructure, co-curing the second region of the first substructure and the second region of the second substructure after contacting to form the composite structure. This has the advantage that a fibre composite structure can be provided that allows for alignment of geometrical tolerances between the substructure to achieve high loadable joints with increased mechanical performance. Furthermore, the method enables covalent bonds within the joints of the substructures with the joints having enhanced reliability thus resulting in avoidance of heavy, expensive and leak prone riveting. Additionally, the method enables differential composite designs, in particular in the manufacture and assembly of complex composite structures such as LH2 tanks.

A further aspect of the invention lies in a composite structure manufactured in a method according to the invention. This has the advantage that a composite structure having complex geometries can be provided with high loadable joints of the substructures. Therein the joints have increased mechanical performance due to aligned geometrical tolerances between the substructures and enhanced reliability due to covalent bonds within the joints. The composite structure provides particular advantages when configured as a LH2 tank since covalent bonds within the joints of the tank substructures ensure tightness and enhanced reliability making heavy, expensive and leak-prone riveting in the structure obsolete.

Advantageous embodiments and further developments are apparent from the further dependent claims and from the description with reference to the figures.

According to an embodiment of the invention, the curing property of the resin in the first and the second region is controllable by at least one of a chemical parameter, a thermal parameter and a physical parameter or a combination thereof. This has the advantage that the adaptation and tailoring of the first and second regions can be achieved by selecting from a plurality of measures to arrive at configurations that best fit the purpose and intended use of the substructures.

By means of non-limiting examples, epoxy monomers such as diglycidylether bisphenol A (DGEBA), triglycidyl-meta-aminophenol (TGMAP), tetraglycidyl methylene dianiline (TGMDA) or diglycidyl ether hexane diol or amines such as (poly) diglycidylether bisphenol F (DGEBF), 4,4' diaminodiphenylsulphon (4,4'DDS), diethyl-toluoldiamin (DETDA), 4,4'-methylenebis(2,6-dieth yleaniline) (MDEA), 4,4'-meth-ylenebis (2-isopropyl-6-methylaniline) (MIPA) or dicyandiamide (DICY) can be used in the resin material.

A non-limiting example for a combination of chemical and thermal parameters is e.g. a combination using commercially available Hexcel M20 epoxy prepreg resin matrix in the first region with curing for 2 hours at 130°C curing temperature for fully curing the first region and to proceed by increasing the curing temperature to 180 °C for 2 hours to cure the second region or regions of the substructures wherein the second region comprises commercially available Hexcel M21 as epoxy prepreg resin matrix having a curing temperature of 180°C resulting in a fully cured prepreg.

A further non-limiting example of using physical parameters of the resin matrix is to use bifunctional resins such as diglycidylether bisphenol A resin (DGEBA) or (poly) diglycidylether bisphenol F (DGEBF) resin to achieve different curing speeds and the desired properties of the resin matrix. In this example long-chain DGEBA resins with Mw>1200 g/mol which have epoxy equivalent weight (EEW) of higher than 600 g/eq reduce reaction speed due to lower internal exothermy and low amount of reactive groups in total and thus allow for the adaption of curing parameters. A further non-limiting option is to use similar resins in the matrix that are sterically hindered wherein the principle is that two epoxy/amine systems are used that in terms of functionality and chemical back-bone are identical but wherein the speed of reaction and curing properties is influenced by modification of reactive groups in the xy-extension of the molecule or the hindering of reactive groups by side groups bound thereto. As a further non-limiting example, compatible but dissimilar resins in the resin matrix such as combinations of two epoxy/amine systems that are compatible but exhibit differences in curing speed can be used to form the specific regions.

According to an embodiment of the invention the curing property is controllable by an addition of at least one additive in the resin for one of accelerating and decelerating curing. This has the advantage that tailored curing speeds are made possible in the different regions and allow for relieving specific temperature profiles during curing thus providing a lower degree of curing within substructures and with more active chemical molecules. The latter has the advantage, that more mechanical performance and process stability is achieved. Beside the chemical / covalent binding interface between two regions and two substructures connected via the regions there is also an interphase defined by a gradient of initial curing which leads due to diffusion and achieves further tailorable characteristics.

Accelerating additives to tailor curing speed in particular in the first region that may be employed are preferably selected from substituted urea compositions such as commercially available Dyhard UR 300/400/500/700/800 agent; phenylimidazol or methylimidazole compositions, without limiting the invention thereto.

Decelerating additives to tailor curing speed in particular in the second region that may be employed are preferably selected from commercially available LA1 (provided in particular by Alzchem Trostberg); urea additivated systems, encapsulated accelerators (such as commercially available LC80) that are thermally latent and preferably decapping at 60-80 °C, uretdione or blocked curing agents such as agents consisting of or comprising carbamate / isophoronediamine mixtures, without limiting the invention thereto.

The embodiments as described above serve to explain the principles of the invention in more detail and by means of examples but are not intended to limit the invention thereto. Other embodiments of the present invention and many of the intended advantages of the present invention will be readily appreciated as they become better understood by reference to the above examples.

According to a further embodiment of the invention the curing property is controllable by one of an increase and a decrease of temperature following a gradient during curing. This has the advantage that the curing properties can be controlled by means of curing temperature following a specific gradient thus ensuring presence of cured and un-cured or semi-cured regions wherein the un-cured or semi-cured regions exhibit the properties and advantages outlined above but omitting a chemical modification such as the addition of accelerating or decelerating agents in the resin matrix. However specific combinations of chemical and thermal as well as physical modifications are encompassed as well.

According to a further embodiment of the invention, the reinforcing fibres are provided as one of fibres pre-impregnated with the resin having the at least one first curing property or the at least one second curing property or as dry fibres to be impregnated with the resin wherein the resin provides the at least one first curing property or the at least one second curing property or combinations thereof in the composite structure. Impregnation can be effected by e.g. by spraying, wiping, pouring, infusing or pressing the resin onto or into the fibres or fibre layer. This has the advantage that parts of the fibre layer configured as a dry fibre semi-finished product can be impregnated or coated with a resin having the first curing properties, whereas another part of the fibre layer can be impregnated with a resin having the second curing properties thus adapting the final fibre composite material according to the specific requirements in subsequent formation of composite structu res.

According to a further embodiment of the invention method, the first and second substructures each have a layered arrangement of the first and second region, and the respective second regions are provided on sides of the substructures facing each other. Impregnation with the polymeric resin matrix can be carried out before, during or after the laying or placement of fibres. This has the advantage that materials can be provided that have configurations required in specific applications and that can be modified by applying respective parameterisation before, i.e. prior to curing the matrix material, during i.e. by co-curing the matrix material or after a first curing step followed by a second curing step of a composite structure.

According to a further embodiment of the invention method, the second region is provided in a longitudinal extension direction of the substructures wherein contacting is achieved by overlapping or abutting the second regions of the respective substructures or by overlapping or abutting the second region of the first sub-structure with the first region of the second substructure. This has the advantage that the fibre composite material can be provided with uniform configuration in the fibre matrix that can be modified in the methods described herein and with respect to the specific requirements of the later use of the material. As a further advantage the embodiment allows for alignment of geometrical tolerances to achieve high loadable joints to increase mechanical performance, enables covalent bonds within the joints, with enhanced reliability and tightness and can, in particular in tank structures enable differential composite designs / assemblies of LH2 tank structures.

According to a further embodiment of the invention method, the second region of the first substructure is interposed between first regions of the second substructure. This has the advantage that a performance relevant gap management can be provided, i.e. manufacturing related geometrical tolerances resulting in bondline gaps are avoided and tailored design of joint regions is enabled by the present invention thus eliminate the need of e.g. additional adhesives or riveting or bolting to comply with manufacturing and requirements related to reliability and tightness as well as mechanical performance of the final composite structures.

According to a further embodiment of the invention method, the at least one connecting layer comprising fibres embedded in an uncured polymer matrix is interposed between the first and the second substructure before co-curing with the connecting layer being co-cured with the second regions. This has the advantage that a secure joining between layers can be achieved without the need to use additional adhesives or mechanical connections since chemical or covalent bond between the regions is achieved thereby forming a highly reliable and tight joint in the respective regions, making rivets, bolts and adhesive bonding obsolete.

According to a further embodiment of the invention method, the first and second regions of at least one of the substructures are formed in a fibre or tape placement process wherein at least on first layer of fibres pre-impregnated with a resin having a first curing property is positioned adjacent to at least one second layer of fibres pre-impregnated with a resin having a second curing property in one of a layered configuration and a configuration having the second layer positioned in a longitudinal extension of the first layer or combinations thereof. This has the advantage of improving gap management and tolerance compensation possible with the second regions still being plastic and hence deformable before curing.

According to an embodiment of the invention, the composite structure is configured as a tank structure, having a first substructure configured as a dome part and a second substructure configured as a cylinder, wherein the dome part is connected to the cylinder in an overlapping area, wherein the second region provided in the cylinder and the second region provided in the dome part facing each other are positioned in the overlapping area forming a bondline between the dome part and the cylinder. This has the advantage that critical regions of the tank structure can be provided with the invention fibre composite material whereas in other regions standard materials can be used. The use of the invention fibre composite material can be limited to these regions thus ensuring the formation of highly reliable and tight joint in the respective regions or a bondline between two layers having different curing properties. Beside the effect of forming a chemical / covalent bonding interface, due to diffusion, an interphase defined by a gradient of curing leads to superior tailorable characteristics thus making additional rivets, bolts and adhesive bonding obsolete.

According to a further embodiment of the invention the composite structure configured as a tank or tank structure has a dome part comprising a longitudinally protruding skirt portion with overlapping area being extended into the skirt portion. It is an advantage of this embodiment, that when employing the fibre composite material in tank structures the tightness of the tank bondline can be further improved since the function is brought by the fibre composite material of the invention itself and does not have to be ensured or supported by additional means such as the application of adhesives or riveting or bolting means.

According to a further embodiment the composite structure being a tank structure is configured as a liquid hydrogen (LH2) tank, in particular in an aircraft, wherein the tank structure is manufactured from fibre reinforced plastic, in particular carbon fibre reinforced plastic (CFRP). Tank structures can have a two-part configuration with a first part configured as a dome part optionally comprising a longitudinally protruding skirt portion and a second part configured as a cylinder, with the first and the second part at least partially overlapping in the skirt portion and wherein the first part is bonded to the second part by co-curing the second regions after assembly thus forming a reliable and tight bondline between the structures. Furthermore, the invention provides advantages in tolerancing during wet to cured part bonding and hence increases manufacturing efficiency and improves overall tank quality.

The invention will be explained in greater detail with reference to exemplary embodiments depicted in the drawings as appended.
- Fig. 1a: schematically depicts a fibre composite material according to an embodiment of the invention;
- Fig. 1b: depicts a flowchart of a method of manufacturing a composite structure according to an embodiment of the invention,
- Fig. 2: schematically depicts composite structures according to embodiments of the invention;
- Fig. 3a-d: schematically depict composite structures according to other embodiments of the invention;
- Fig. 4: schematically depicts a composite structure according to another embodiment of the invention; and
- Fig. 5: schematically depicts a section of a composite structure according to an embodiment of the invention configured as a tank structure.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

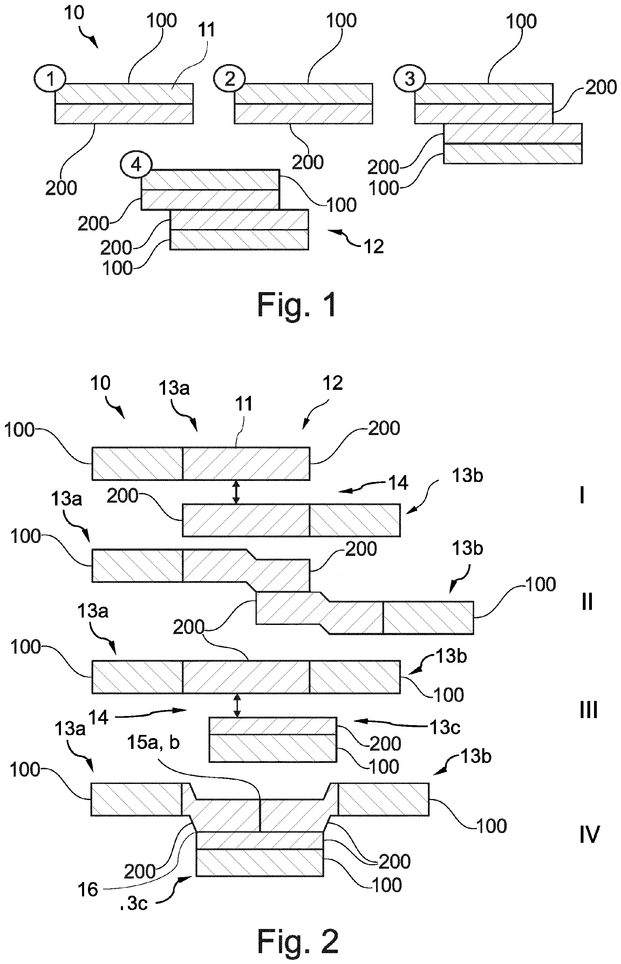

Fig. 1a schematically depicts a fibre composite material 10 containing at least one layer of reinforcing fibres embedded in a polymer matrix 11, with the polymer matrix 11 being formed by a curable resin, whereas Fig. 1b depicts a flowchart of a method of manufacturing a composite structure according to an embodiment of the invention. The fibre composite material 10 comprises at a first region 100 having a first curing property of the resin and a second region 200 having a second curing property of the resin. In the first step 1 of the method the uncured fibre composite material 10 is provide before curing wherein in the second step 2 the first region 100 has undergone a first temperature profile that triggers curing of the resin material placed in the first region 100. The second region 200 provided as a second layer in the fibre composite material 10 of Fig. 1 comprises a resin in the polymer matrix 11 that cures at a different, increased temperature compared to the resin of the first region 100. In the third step 3 two fibre composite materials 10 are positioned adjacent with the second regions 200 facing each other. In this step the un-cured or semi-cured resins of the second regions 200 contact each other and are subject to diffusion and formation of a chemical / covalent binding interface between the resin of the second regions 200. In the fourth step 4 the entire composite structure 12 is cured at a second temperature which differs from the first curing temperature and which triggers curing of the resin in the polymer matrix 11 of the second regions 200 to form a highly reliable and tight joint in the second regions 200.

Fig. 2 schematically depicts composite structures 12 according to further embodiments of the invention. Therein, first substructures 13a and second substructure 13b each comprising or consisting of a polymer matrix 11 having resin impregnated fibres embedded therein, are about to be joined in the respective second regions 200 of the substructures 13a, b, whereas the second regions 200 are provided in a longitudinal extension direction of the fibre composite material 10 forming the substructures 13a, b. Contacting is achieved by overlapping or abutting the second regions 200 of the respective substructures 13a, b. The embodiments presented in Fig. 2 address a performance relevant gap management. Due to manufacturing related geometrical tolerances, a bondline gap 14 can occur that can be compensated by using the fibre composite material 10 of the invention. The design options presented in Fig. 2 apply locally cured second regions 200 to compensate for manufacturing tolerances or to close gaps 14 between the substructures 13a, b when manufacturing a composite structure 12. While first regions 100 in the respective substructures 13a, b to be joined are fully cured due to the curing properties provide in the resin of the polymer matrix 11 and the respective treatment (chemically and/or thermal) of the first regions 100. The second regions 200 remain plastic due to different curing properties of the polymer matrix material applied in the second regions 200. After contacting the second regions 200 of the substructures 13a, b and compensation of manufacturing tolerances or closing of gaps 14 the composite structure 12 is cured at a second temperature to ultimately join the substructures 13a, b. The embodiments in the upper part of Fig. 2 depict the situation with an overlapping and gap/tolerance compensation using the second regions 200 before I and after II joining the substructures 13a, b. In the embodiments shown in the lower part of Fig. 2 the second regions 200 are contacted by abutting the longitudinal ends 15a, b of the respective substructures 13a, b and a gap 14 compensation is effected by contacting the ends 15a, b of abutting second regions 200 with a further substructure 13c provide below the contacted second regions 200 of the first and second substructure 13a, b. The third substructure 13c has the same configuration as the embodiments shown in Fig. 1 with a second region 200 on the side facing the contact region 16 of the second regions 200 of the first and second substructure 13a, b. During gap 14 compensation III, the second regions 200 of the first and second substructure 13a, b, while still plastic are bend towards the third substructure 13c to contact the second region 200 in the third substructure 13c and to compensate a gap 14 as well as manufacturing tolerances. After contacting, the entire composite structure 12 is cured at a second temperature to trigger curing of the resin in the polymer matrix 11 in the second regions 200 thus forming the final composite structure 12 having gap 14 and manufacturing tolerances eliminated IV.

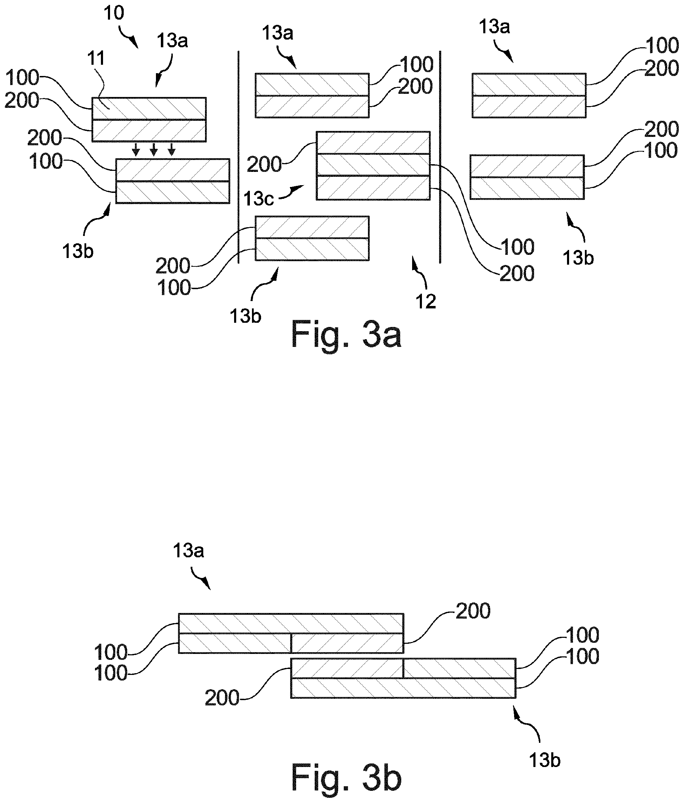

Fig. 3a to d present other design concepts of fibre composite material 10 and composite structures 12 using the same to achieve bonding in the various substructures 13a, b, c. Fig 3a depicts substructures 13a, b, c having the first regions 100 and second regions 200 provided in a layered orientation of the fibre composite material 10. By contacting the second regions 200 of the substructures 13a, b, c and curing the composite structure 12 thus formed a tight bond between the substructures 13a, b, c can be achieved. The first and second regions 100, 200 have different curing properties that are either achieved by applying differing curing agents in the respective first and second regions 100, 200. While the first regions 100 comprise a resin in the polymer matrix 11 having an accelerating agent in the resin material, in the second regions 200 a decelerator is added to the resin as an additive. Due to this chemical adaptation, curing properties can be controlled to ensure curing of the first and second regions 100, 200, respectively in a timed matter and/or by applying a modified thermal gradient during curing. In the embodiment as depicted in Fig. 3b, the second regions 200 are provided in a dedicated areas of the substructures 13a, b thus allowing to adapt the design of the curable first and second regions 100, 200 to the specific needs set out by the configuration and design of the final composite structure 12 formed therewith.

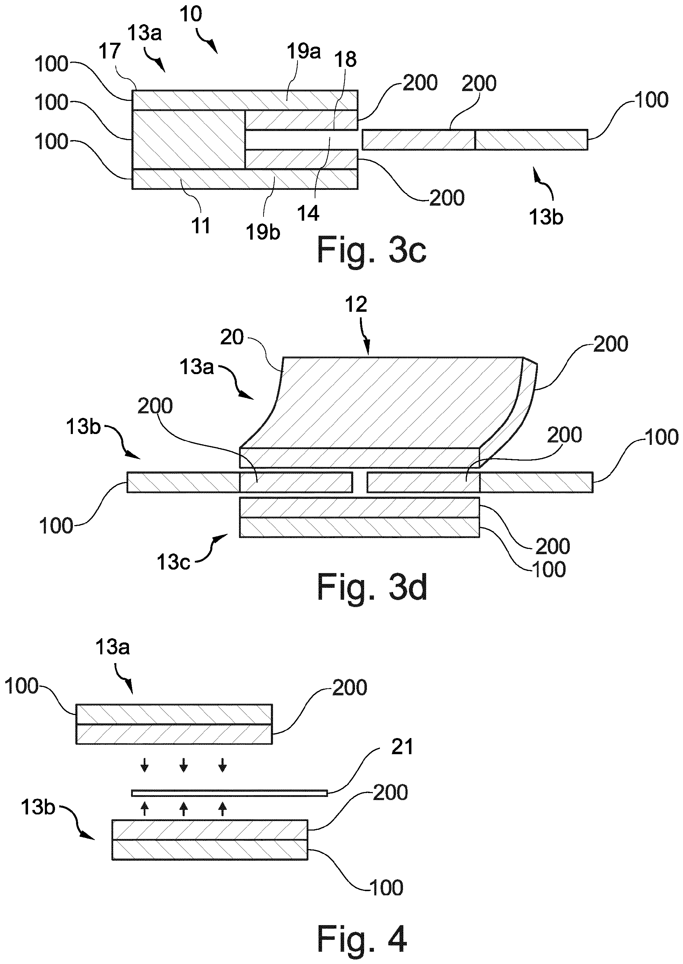

Fig. 3c depicts a further embodiment of a composite structure 12 formed by joining substructures 13a, b having a design with each substructure 13a, b being provided with first and second regions 100, 200 having different curing properties. Whereas the first substructure 13a consist of a main part 17 consisting of or providing the first region 100, manufactured from a fibre composite material 10 with first curing property. Herein a fast-curing resin is used in the polymer matrix 11 that cures at a first condition or temperature or cures faster than the resin used in the second regions 200. The main part 17 further comprises second regions 200 formed on the inner sides 18 of extending portions 19a, b of the main part 17 and formed by a polymer matrix 11 having fibres embedded therein. The resin used in the polymer matrix 11 has decelerators added to set a second property during curing, i.e. a slower or later curing than the resin in the polymer matrix 11 of the main part 17. The uncured second regions 200 are contacted by the second region 200 of a second substructure 13b that is provide in a longitudinal extension with respect to the first already cured region 100 of the second substructure 13b. After insertion of the second region 200 of the second substructure 13b in the gap 14 formed in the main part 17, the second regions 200 of the main part 17 and the second region 200 of the second substructure 13b are contacted and joined by curing. During and after insertion and before curing covalent or chemical bonds are formed in the uncured second regions 200. Furthermore, diffusion of the resin molecules between the second regions 200 occurs. This supports tight and reliable bonding of the substructures 13a, b without the requirement of using additional adhesives to ensure proper bonding.

Fig. 3d presents a further option of joining substructures 13a, b, c consisting of un-cured material with substructures 13a, b, c comprising first cured regions 100 and second uncured regions 200. The first substructure 13a consists entirely of a resin material in the fibre composite material 10 having a reduced curing speed and formed as a winded belt 20, whereas the second and third substructures 13b, c have the configuration as described in connection with the previous embodiments. After joining the second regions 200 of the substructures 13a, b, c the entire composite structure 12 is cured and hence the substructures 13a, b, c joint in a tight and reliable way, eliminating the requirement to provide second load paths in the structure by adding e.g. rivets or bolts in critical regions of the composite structure 12.

Fig. 4 presents a further design option that uses substructures 13a, b, having a layered configuration of first and second regions 100, 200. To join the substructures 13a, b, an intermediate layer 21 of uncured material, having the same or equivalent curing properties as the second regions 200 of the substructures 13a, b is interposed between the substructures 13a, b and co-cured with the second regions 200 thus forming a joining region or bondline between the substructures 13a, b. Before curing the intermediate layer 21 and the second regions 200 form covalent or chemical bonds. Furthermore, a diffusion of resin or matrix materials or molecules is initiated when contacting the intermediate layer 21 and the second regions 200. The bonding formed pre-curing are strengthened and fixed during curing to form the final composite structure 12.

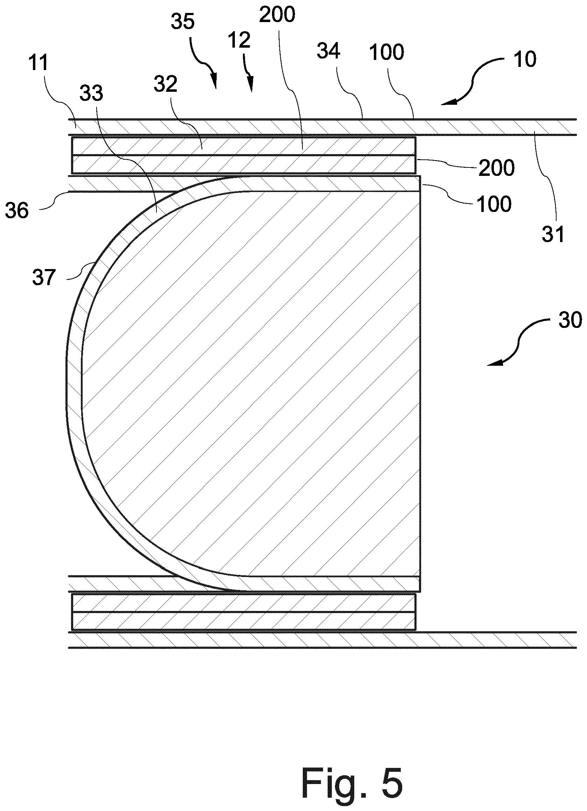

Fig. 5 schematically depicts a section of a composite structure 12 according to an embodiment of the invention configured as a tank structure 30. By means of simplified illustration only a part of the tank structure 30 is presented herein. In this embodiment, the tank structure 30 has a cylindrical geometry, without being limited thereto. The tank structure 30 is in some circumstances used for the storage of liquid hydrogen (LH2) under cryogenic conditions and consists of a fibre composite material 10 or laminate such as laminate consisting of carbon fibre reinforced plastic CFRP, in particular when used in the aircraft industry due to the requirement of weight saving. Use of fibre composite materials 10 or laminates is preferred for aviation purposes due to high strength-to- weight ratios. Employing the fibre composite material 10 of the invention in the tank structure 30, the function of ensuring tightness of the tank structure 30 in particular in the bondline 32 between the dome part 33 and the cylindrical part 34 is brought by the fibre composite material 10 of the invention itself and does not have to be incorporated in an extra step during manufacturing. Any tolerance compensation in the overlapping area 35 is achieved by using the fibre composite material 10 of the invention having first and second regions 100 ,200 with different curing properties.

The tank structure 30 has a two-part configuration with a first part configured as a dome part 33 comprising a longitudinally protruding skirt portion 36 and a second part configured as a cylindrical part 34. The second part overlaps the first part in the skirt portion 36, after introduction of the first part into the second part. The first and the second part are manufactured from a fibre composite material 10 having a first region 100 fully cured due to enrichment of the resin of the polymer matrix 11 with an additive accelerating curing at a first curing condition i.e. curing temperature thus stabilising the geometry of the parts. A second region 200 is provided on the inner surface 31 of the cylindrical part 34 and the outer surface 37 of the dome part 33. These surfaces 31, 37 overlap during assembly. The uncured or semi-cured second regions 200 provide in the overlapping area 35 are contacted during assembly and immediately form covalent /chemical bonds between the molecules of the resin in the polymer matrix 11 and diffusion occurs within the second regions 200. Having fully assembled the two parts, the tank structure 30 is cured and the resin in the polymer matrix 11 of the second regions 200 settle thus providing a tight and reliable bondline 32 between the two parts. The curing properties of the second regions 200 are modified to cure slower or at a curing temperature that is higher than the temperature applied to cure the first regions 100. Modification is achieved by adding decelerating additives to the resin. In the pre-curing or open phase of the resin tolerance compensation can be made and manufacturing accuracy and efficiency be further improved. The tank structure 30 provided eliminates the need to provide bolts or rivets passing through the skirt portion 36 since the bondline 32 is sufficiently reliable and tight due to chemical/covalent bonds established in the second regions 200 after curing.

The formation of second regions 200 is not limited to the bondline 32 but can also be applied to the entire overlapping area 35 of the two parts forming the final tank structure 30. The tank structure 30 as described herein has several advantages. Since tank systems need to be segmented to enable system installation to the inner of the tank the invention method and fibre composite material 10 forming the tank structure 30 provide a safe and reliable joining technology and makes the use of thermosetting (TS) adhesive joining or thermoplastic (TP) welding, both not considered qualified to meet in particular aviation demands, obsolete. Furthermore bolting/riveting, undesirable as it perforates the tank, thereby being prone to leakage in the bolt area, is not required.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 1: first step
- 2: second step
- 3: third step
- 4: fourth step
- 10: fibre composite material
- 11: polymer matrix
- 12: composite structure
- 13a, b, c: substructure
- 14: gap
- 15a, b: end
- 16: contact region
- 17: main part
- 18: inner side
- 19a, b: extending portion
- 20: winded belt
- 21: intermediate layer
- 30: tank structure
- 31: inner surface
- 32: bondline
- 33: dome part
- 34: cylindrical part
- 35: overlapping area
- 36: skirt portion
- 37: outer surface
- 100: first region
- 200: second region

## Claims

1. Fibre composite material (10) containing at least one layer of reinforcing fibres embedded in a polymer matrix (11), with the polymer matrix (11) being formed by a curable resin and comprising at least one first region (100) having a first curing property of the resin and at least one second region (200) having a second curing property of the resin, wherein the at least one first curing property is different from the at least one second curing property.

2. Fibre composite material (10) according to claim 1, wherein the curing property of the resin in the first region (100) and the second region (200) is controllable by at least one of a chemical parameter, a thermal parameter and a physical parameter or a combination thereof.

3. Fibre composite material (10) according to claim 1 or 2, wherein the curing property is controllable by an addition of at least one additive in the resin for one of accelerating and decelerating curing.

4. Fibre composite material (10) according to any one of claims 1 to 3, wherein the curing property is controllable by one of an increase and a decrease of temperature following a gradient during curing.

5. Fibre composite material (10) according to any one of claims 1 to 4, wherein the reinforcing fibres are provided as one of fibres pre-impregnated with the resin having the at least one first curing property or the at least one second curing property or as dry fibres to be impregnated with the resin having the at least one first curing property or the at least one second curing property after placement in a composite structure (12) or combinations thereof.

6. Method of manufacturing a composite structure (12), comprising at least a first and a second substructure (13a, b, c) each comprising or consisting of a fibre composite material (10) according to any one of claims 1 to 5, comprising the steps of:
- curing the first region (100) of the at least one first substructure (13a) and the first region (100) of the at least one second sub-structure (13b),
- contacting the at least one first substructure (13a) with the at least one second substructure (13b),
- co-curing the second region (200) of the at least one first substructure (13a) and the second region (200) of the at least one second substructure (13b) after contacting to form the composite structure (12).

7. Method according to claim 6, wherein the at least one first substructure (13a) and the at least one second substructure (13b) each has a layered arrangement of the first region (100) and the second region (200), and the respective second regions (200) are provided on sides of the substructures (13a, b, c) facing each other.

8. Method according to claim 6 or 7, wherein the second regions (200) are provided in a longitudinal extension direction of the substructures (13a, b, c) wherein contacting is achieved by overlapping or abutting the second regions (200) of the respective substructures (13a, b, c) or by overlapping or abutting the second region (200) of the at least one first substructure (13a) with the second region (200) of the at least one second substructure (13b).

9. Method according to any one of claims 6 to 8, wherein the second region (200) of the at least one first substructure (13a) is interposed between first regions (100) of the at least one second substructure (13b).

10. Method according to any one of claims 6 to 9, wherein at least one connecting layer (21) comprising fibres embedded in a preferably uncured polymer matrix (11) is interposed between the at least one first substructure (13a) and the at least one second substructure (13b) before co-curing with the connecting layer (21) being co-cured with the second regions (200).

11. Method according to any one of claims 6 to 10, wherein the first regions (100) and the second regions (200) of at least one of the substructures (13a, b, c) are formed in a fibre or tape placement process wherein at least on first layer of fibres pre-impregnated with a resin having a first curing property is positioned adjacent to at least one second layer of fibres pre-impregnated with a resin having a second curing property in one of a layered configuration and a configuration having the second layer positioned in a longitudinal extension of the first layer or combinations thereof.

12. Composite structure (12) manufactured in a method according to any one of claims 6 to 11.

13. Composite structure (12) according to claim 12, wherein the composite structure (12) is configured as a tank structure (30), having a first substructure (13a) configured as a dome part (33) and a second substructure (13b) configured as a cylindrical part (34), wherein the dome part (33) is connected to the cylindrical part (34) in an overlapping area (35), wherein the second region (200) provided in the cylindrical part (34)and the second region (200) provided in the dome part (33) facing each other are positioned in the overlapping area (35) forming a bondline (32) between the dome part (33) and the cylindrical part (34).

14. Composite structure (12) according to claim 13, wherein the dome part (33) comprises a longitudinally protruding skirt portion (36) with the overlapping area (35) being extended into the skirt portion (36).

15. Composite structure (12) according to claim 13 or 14, wherein the tank structure (30) is configured as a liquid hydrogen (LH2) tank, in particular in an aircraft and/or wherein the tank structure (30) is manufactured from fibre reinforced plastic, in particular carbon fibre reinforced plastic (CFRP).
